# EUROPÄISCHE PATENTSCHRIFT

(11) **EP 3 887 217 B1**
(45) Veröffentlichungstag und Bekanntmachung des Hinweises auf die Patenterteilung: **09.11.2022**
(21) Anmeldenummer: 19783444.3
(22) Anmeldetag: 21.09.2019
(51) Int. Cl.: B60T 8/172, B60T 8/175, B60T 8/1761

(54) **VERFAHREN ZUR ERMITTLUNG EINES ZUKÜNFTIGEN RADBREMSDRUCKS EINER HYDRAULISCHEN FAHRZEUGBREMSANLAGE**
METHOD FOR DETERMINING A FUTURE WHEEL BRAKE PRESSURE OF A HYDRAULIC VEHICLE BRAKE SYSTEM
PROCÉDÉ POUR DÉTERMINER UNE PRESSION DE FREIN DE ROUE FUTURE D'UN SYSTÈME DE FREINAGE DE VÉHICULE HYDRAULIQUE

(30) Priorität: 29.11.2018 DE 102018220557
(43) Veröffentlichungstag der Anmeldung: 06.10.2021
(73) Patentinhaber: Robert Bosch GmbH, 70442 Stuttgart (DE)
(72) Erfinder: VON KELER, Johannes, 72074 Tuebingen (DE); KRAUTTER, Andreas, 71711 Steinheim (DE)
(86) Internationale Anmeldenummer: PCT/EP2019/075433
(87) Internationale Veröffentlichungsnummer: WO 2020/108818

(56) Entgegenhaltungen:
- DE-A1-102015 215 926
- GB-A- 2 403 520
- US-A1- 2015 027 113

## Beschreibung

Die Erfindung betrifft ein Verfahren zur Ermittlung eines zukünftigen Radbremsdrucks einer hydraulischen Fahrzeugbremsanlage mit den Merkmalen des Oberbegriffs des Anspruchs 1.

Ein derartiges Verfahren ist aus dem Dokument GB 2 403 520 A bereits bekannt.

Das erfindungsgemäße Verfahren soll eine Druckregelung oder einen Beginn einer Druckregelung in hydraulischen Radbremsen der Fahrzeugbremsanlage verbessern. Die Fahrzeugbremsanlage weist einen Bremsdruckerzeuger auf, an den ein Drucksensor und eine oder mehrere hydraulische Radbremsen über jeweils ein Ventil angeschlossen sind. Das Ventil wird hier, zur seiner eindeutigen Bezeichnung, auch als Einlassventil bezeichnet werden, was die Erfindung jedoch nicht beschränken soll. Drucksensoren an den Radbremsen sind im Rahmen der Erfindung zwar möglich, jedoch an sich nicht vorgesehen und jedenfalls nicht notwendig.

Der Bremsdruckerzeuger kann ein von Hand mit einem Handbremshebel oder per Fuß mit einem Fußbremspedal, allgemein also ein mit Muskelkraft oder Hilfskraft betätigtbarer Hauptbremszylinder sein. "Hilfskraft" bedeutet eine Verstärkung der Muskelkraft mit einem Bremskraftverstärker, beispielsweise einem Unterdruck- oder einem elektromechanischen Bremskraftverstärker. Zusätzlich oder statt des Muskel- oder Hilfskraft-Bremsdruckerzeugers kann die Fahrzeugbremsanlage einen Fremdkraft-Bremsdruckerzeuger aufweisen.

Vorzugsweise weist die Fahrzeugbremsanlage außer dem/den Ventil/en, über die die hydraulische/n Radbremse/n an den Bremsdruckerzeuger angeschlossen ist/sind und das/die hier auch als Einlassventil/e bezeichnet wird/werden, für jede Radbremse ein weiteres Ventil auf, durch welches Radbremsdrücke in den Radbremsen abgesenkt werden können. Das/Die weiteren Ventile werden zu ihrer eindeutigen Bezeichnung und zur Unterscheidung von dem/den Enlassventil/en, hier auch als Auslassventile bezeichnet werden, was die Erfindung jedoch nicht beschränken soll.

Die Radbremsdrücke in den Radbremsen werden zur Erzeugung einer gewünschten Bremskraft und/oder für Schlupfregelungen wie einer Blockierschutz-, Antriebsschlupf- und/oder Fahrdynamikregelung bzw. ein elektronisches Stabilitätsprogramm geregelt, für die die Abkürzungen ABS, ASR und/oder FDR bzw. ESP gebräuchlich sind. Die Fahrdynamikregelung bzw. das elektronische Stabilitätsprogramm werden umgangssprachlich oft auch als Schleuderschutzregelung bezeichnet. Unter einer Regelung ist auch eine Steuerung der Radbremsdrücke zu verstehen.

Um die Radbremsdrücke in den Radbremsen regeln zu können, ist es günstig, die Radbremsdrücke zu kennen, die in einer Zeitspanne von typischerweise einigen ms bis einigen 10 ms nach einer Messung eines Druckerzeugerdrucks im Bremsdruckerzeuger in den Radbremsen der Fahrzeugbremsanlage herrschen werden, um das/die Ventile, durch die die hydraulische/in Radbremse/in an den Bremsdruckerzeuger angeschlossen sind, schließen und dann die Druckregelung beginnen zu können.

Möglich wäre eine Extrapolation des nach der Zeitspanne mit dem Drucksensor in dem Bremsdruckerzeuger gemessenen Druckerzeugerdrucks auf Grundlage der beiden oder mehr letzten Druckmessungen. Eine Extrapolation eines Messwerts des Druckerzeugerdrucks führt bei hochdynamischen Druckänderungen mit schnell steigendem Druck zu ungenauen und von Fall zu Fall stark schwankenden extrapolierten Drücken, die für die Regelung bzw. den Beginn der Regelung normalerweise unbrauchbar sind.

### Offenbarung der Erfindung

Die Erfindung sieht eine andere Art der Ermittlung der zukünftigen Radbremsdrücke in den Radbremsen der Fahrzeugbremsanlage in einer Zeitspanne nach der Messung des Druckerzeugerdrucks vor, wobei die Zeitspanne insbesondere eine Totzeit des Drucksensors und eine Schließzeit des/der hier auch als Einlassventile bezeichneten Ventile ist, durch die die hydraulischen Radbremsen an den Bremsdruckerzeuger angeschlossen sind. Die Totzeit des Drucksensors ist die

Zeit, die von einer Änderung des Druckerzeugerdrucks bis zu einer Änderung eines Ausgangssignals des Drucksensors vergeht. Die Schließzeit des Ventils ist die Zeit, die von einer Ansteuerung des Ventils bis das Ventil geschlossen ist, vergeht.

Erfindungsgemäß wird für jede Messung des Druckerzeugerdrucks eine Radbremsdruckänderung in der bzw. den Radbremse/n während eines Messzeitabstands nach der jeweiligen Messung des Druckerzeugerdrucks ermittelt. Der Messzeitabstand ist die Zeitspanne zwischen zwei aufeinanderfolgenden Messungen des Druckerzeugerdrucks. Der Messzeitabstand ist vorzugsweise konstant, kann grundsätzlich aber auch variabel sein. Der Messzeitabstand kann auch als Taktzeit (Kehrwert einer Taktfrequenz), (Ab-)Tastzeit oder (Ab-)Tastrate bezeichnet werden. Der Messzeitabstand, in dem der Druckerzeugerdruck gemessen wird, ist kürzer als die Zeitspanne, für die der/die Radbremsdrücke nach der Messung ermittelt werden soll. Vorzugsweise ist die Zeitspanne ein niedriges, ganzzahliges Vielfaches des Messzeitabstands.

Die Radbremsdruckänderung/en aufgrund des Druckerzeugerdrucks kann beispielsweise mittels einer Strömungsgleichung, beispielsweise der Bernoulligleichung, berechnet, einem Kennfeld entnommen oder in anderer Weise ermittelt werden. Das Kennfeld der Fahrzeugbremsanlage kann beispielsweise experimentell ermittelt werden.

Als Radbremsdruck, der nach der Zeitspanne nach der Messung des Druckerzeugerdrucks in der/den Radbremsen herrschen wird, werden zum (letzten) gemessenen Druckerzeugerdruck die Radbremsdruckänderungen addiert, die während einer gleich langen Zeitspanne vor der (letzten) Messung des Druckerzeugerdrucks ermittelt worden sind, wobei die zur (letzten) Messung ermittelte Radbremsdruckänderung die (letzte) addierte Radbremsdruckänderung ist.

Das erfindungsgemäße Verfahren liefert ziemlich genaue Werte der Radbremsdrücke, die nach der die Totzeit des Drucksensors und die Schließzeit des Einlassventils/der Einlassventile umfassenden Zeitspanne nach einer Messung des Druckerzeugerdrucks in den Radbremsen herrschen werden. Die mit dem erfindungsgemäßen Verfahren ermittelten Werte der Radbremsdrücke sind jedenfalls ausreichend genau, um den Zeitpunkt des Schließens der Einlassventile und den Beginn der Regelung der Radbremsdrücke festzulegen. Während und zur Regelung der Radbremsdrücke können die Einlassventile auch wieder geöffnet werden.

Die abhängigen Ansprüche haben Weiterbildungen und vorteilhafte Ausgestaltungen der im unabhängigen Anspruch angegebenen Erfindung zum Gegenstand.

### Kurze Beschreibung der Zeichnung

Die Erfindung wird nachfolgend anhand einer in der Zeichnung dargestellten Ausführungsform näher erläutert. Die einzige Figur zeigt eine Schemadarstellung einer hydraulischen Muskelkraft- und Fremdkraft-Fahrzeugbremsanlage zur Erläuterung des erfindungsgemäßen Verfahrens.

### Ausführungsform der Erfindung

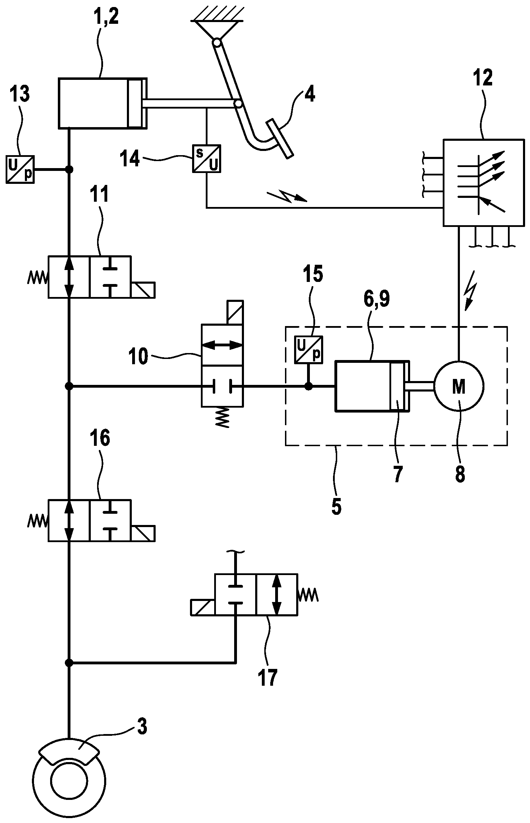

Die in Figur 1 vereinfacht dargestellte hydraulische Fahrzeugbremsanlage ist eine Muskelkraft- und Fremdkraft-Fahrzeugbremsanlage. Sie weist einen Hauptbremszylinder 1 auf, der allgemein als Muskelkraft-Bremsdruckerzeuger 2 aufgefasst werden kann. An den Hauptbremszylinder 1 ist ein oder sind vorzugsweise mehrere Bremskreise mit jeweils einer oder mehreren hydraulischen Radbremsen 3 angeschlossen. Gezeichnet ist ein Einkreis-Hauptbremszylinder 1, an den ein Bremskreis angeschlossen ist. Vorzugsweise weist die Fahrzeugbremsanlage einen Zweikreis-Hauptbremszylinder 1 auf, an den zwei Bremskreise mit jeweils einer oder mehreren Radbremsen 3 angeschlossen sind. Beispielsweise weist die Fahrzeugbremsanlage in jedem Bremskreis zwei Radbremsen 3 auf. Der Hauptbremszylinder 1 ist mittels eines Bremspedals 4 oder eines nicht gezeichneten Handbremshebels mit Muskelkraft betätigbar und kann einen Bremskraftverstärker aufweisen (nicht dargestellt).

Als weiteren Bremsdruckerzeuger weist die Fahrzeugbremsanlage einen Fremdkraft-Bremsdruckerzeuger 5 mit einer Kolben-Zylinder-Einheit 6 auf, deren Kolben 7 zur Erzeugung eines Bremsdrucks in der Fahrzeugbremsanlage mit einem Elektromotor 8 über einen nicht dargestellten Gewindetrieb in einem Zylinder 9 verschiebbar ist. Jeder Bremskreis ist durch ein Fremdkraftventil 10 an den Zylinder 9 der Kolben-Zylinder-Einheit 6 des Fremdkraft-Bremsdruckerzeugers 5 angeschlossen.

Zu einer Betätigung der Fahrzeugbremsanlage wird ein Bremsdruck mit dem Fremdkraft-Bremsdruckerzeuger 5 erzeugt und durch Öffnen des/der Fremdkraftventils/e 10 die Radbremse/n 3 mit dem Bremsdruck beaufschlagt. Der Hauptbremszylinder 1 wird dabei durch Schließen eines Trennventils 11 hydraulisch von der Fahrzeugbremsanlage getrennt, wobei jeder Bremskreis durch ein je Trennventil 11 an den Hauptbresmzylinder 1 angeschlossen ist, der wie geschrieben einen Muskelkraft-Bremsdruckerzeuger 2 bildet.

Bei der Fremdkraftbetätigung dient der Hauptbremszylinder 1 als Sollwertgeber für den von dem Fremdkraft-Bremsdruckerzeuger 5 zu erzeugenden Bremsdruck, der von einem elektronischen Steuergerät 12 in Abhängigkeit von der Pedalkraft, dem Pedalweg und/oder dem Hauptbremszylinderdruck geregelt wird. Dazu ist an den Hauptbremszylinder 1 eine Drucksensor 13 angeschlossen und das Bremspedal 4 weist einen Pedalwegsensor 14 auf. An den Zylinder 9 des Fremdkraft-Bremsdruckerzeugers 8 ist ebenfalls ein Drucksensor 15 angeschlossen. Die Drucksensoren 13, 15 und der Pedalwegsensor 14 sind an das elektronische Steuergerät 12 angeschlossen.

Mit dem Hauptbremszylinder 1 wird die Radbremse 3 bzw. werden die Radbremsen 3 bei einer Störung oder einem Ausfall des Fremdkraft-Bremsdruckerzeugers 5 betätigt.

Jeder Radbremse 3 ist ein Einlassventil 16 und ein Auslassventil 17 zugeordnet, mit denen Schlupfregelungen wie Blockierschutz-, Antriebsschlupf- und Fahrdynamik- bzw. Schleuderschutzregelungen in an sich bekannter Weise möglich sind. Für diese Schlupfregelungen sind die Abkürzungen ABS, ASR und FDR bzw. ESP gebräuchlich. Die Bremsdruckregelung erfolgt mit dem Fremdkraft-Bremsdruckerzeuger 5 und/oder den Einlassventilen 16 und Auslassventilen 17. Das/die Trennventile 11 und die Einlassventile 16 sind stromlos offene- und das/die Fremdkraftventile 10 und die Auslassventile 17 stromlos geschlossene 2/2-Wege-Magnetventile, was allerdings nicht zwingend für die Erfindung ist.

Erfindungsgemäß wird bei der Betätigung der Fahrzeugbremsanlage mit dem Fremdkraft-Bremsdruckerzeuger 5 ein in dem Zylinder 9 des Fremdkraft-Bremsdruckerzeugers 5 herrschender Druck, der hier als Druckerzeugerdruck p_{Vor} bezeichnet wird, mit dem Drucksensor 15 gemessen. Die Messungen erfolgen in vorzugsweise konstanten Messzeitabständen t_{Takt}.

Für die gemessenen Druckerzeugerdrücke p_{Vor} werden Radbremsdruckänderungen p_{Inc} i in den Radbremsen 3 ermittelt, und zwar werden die Radbremsdruckänderungen p_{Inc} i während des Messzeitabstands t_{Takt} bis zur nächsten Messung des Druckerzeugerdrucks p_{Vor} ermittelt. Die Summe des gemessenen Druckerzeugerdrucks p_{Vor} und der Radbremsdruckänderung p_{Inc i} ist der Radbremsdruck p_{Rad}, der nach dem Messzeitabstand t_{Takt} in den Radbremsen 3 herrschen wird.

Die Ermittlung der Radbremsdruckänderung p_{Inc} i kann eine Berechnung beispielsweise mit einer Strömungsgleichung wie der Bernoulligleichung sein. Berechnet wird beispielsweise ein Volumenstrom von Bremsflüssigkeit aus dem Zylinder 9 der Kolben-Zylinder-Einheit 6 des Fremdkraft-Bremsdruckerzeugers 5 in die Radbremse/n 3 und die sich daraus ergebenden Radbremsdruckänderungen p_{Inc i}. Eine andere Möglichkeit ist eine Ermittlung der Radbremsdruckänderung p_{Inc} i aus einem Kennfeld, das beispielsweise experimentell ermittelt und gespeichert wird. Andere Arten der Ermittlung der Radbremsdruckänderung p_{Inc} i sind ebenfalls möglich. Die Summe des gemessenen Druckerzeugerdrucks p_{Vor} und der Radbremsdruckänderung p_{Inc} i während des Messzeitabstands t_{Takt} bis zur nächsten Messung ergibt den Radbremsdruck in der/den Radbremsen 3 bei der nächsten Messung des Druckerzeugerdrucks p_{Vor}.

Erfindungsgemäß wird allerdings nicht nur eine Radbremsdruckänderung p_{Inc} i zum Druckerzeugerdruck addiert, sondern es werden mehrere Radbremsdruckänderungen p_{Inc} i zum zuletzt gemessenen Druckerzeugerdruck p_{Vor} addiert. Addiert werden die Radbremsdruckänderungen p_{Inc i}, die in einer Zeitspanne t_{Tot} ermittelt worden sind, die so lange wie eine Totzeit des Drucksensors 15 und eine Schließzeit des/eines der Einlassventils/e 16 ist und die mit der letzten Messung des Druckerzeugerdrucks p_{Vor} endet. Die Messzeitabstände t_{Takt} sind kürzer als die Zeitspanne t_{Tot}, so dass mehrere Radbremsdruckänderungen p_{Inc} i berücksichtigt bzw. addiert werden. Die Summe des zuletzt gemessenen Druckerzeugerdrucks p_{Vor} und der ermittelten Radbremsdruckänderungen p_{Inc i} während der Zeitspanne t_{Tot} vor bzw. bis zu der Messung wird als der bzw. werden als die in den Radbremsen 3 herrschenden Radbremsdrücke p_{Rad} nach derselben Zeitspanne t_{Tot} nach der Messung des Druckerzeugerdrucks p_{Vor} angesehen. Es werden also die Radbremsdrücke p_{Rad} ermittelt, die theoretisch um die Totzeit des Drucksensors 15 und die Schließzeit des bzw. eines der Einlassventile 16 nach der letzten Messung des Druckerzeugerdrucks p_{Vor} in den Radbremsen 3 herrschen werden.

Die zu jedem gemessenen Druckerzeugerdruck p_{Vor} ermittelten Radbremsdruckänderungen p_{Inc i} werden in einen Ringsspeicher geschrieben, wobei es sich um einen First In - First Out Speicher handelt, bei dem der älteste Wert vom jüngsten Wert überschrieben wird. Der Ringsspeicher hat so viele Speicherstellen, wie Messungen des Druckerzeugerdrucks p_{Vor} während der Zeitspanne t_{Tot} erfolgen. Die Summe der im Ringsspeicher gespeicherten Radbremsdruckänderungen p_{Inc i} wird zum zuletzt gemessenen Druckerzeugerdruck p_{Vor} addiert und bildet den theoretischen Radbremsdruck in den Radbremsen 3 um die Zeitspanne t_{Tot} nach der Messung.

Das bzw. die Einlassventile 16 werden geschlossen, wenn der ermittelte zukünftige Radbremsdruck p_{Rad} nach der Zeitspanne t_{Tot} den Solldruck p_{Soll} erreicht oder überschreitet, wobei der Solldruck p_{Soll} vom Fahrer mit dem Hauptbremszylinder 1 und/oder von einer anderen fahrdynamischen Regelfunktion wie z. B. ABS, ASR und/oder FDR bzw. ESP vorgegeben werden kann. Dabei kann der Solldruck p_{Rad} gleich groß oder anders als der Hauptbremszylinderdruck sein.

Der zukünftige Radbremsdruck p_{Rad} wird insbesondere nur ermittelt, wenn das/die Einlassventil/e 16 offen ist/sind, der Druckerzeugerdruck p_{Vor} steigt und/oder das/die Einlassventil/e 16 beispielsweise für eine Radbremsdruckregelung und/oder eine Schlupfregelung geschlossen werden soll/en.

Das erfindungsgemäße Verfahren ist ebenso auch bei einer Muskelkraft- oder Hilfskraft-Betätigung der Fahrzeugbremsanlage mit dem Hauptbremszylinder 1 möglich, der den Muskelkraft-Bremsdruckerzeuger 2 bildet.

Das in den Ansprüchen angegeben Ventil ist das bzw. sind die Einlassventile 16.

## Patentansprüche

1. Verfahren zur Ermittlung eines zukünftigen Radbremsdrucks (p_{Rad}) einer hydraulischen Fahrzeugbremsanlage, die einen Bremsdruckerzeuger (5) aufweist, an den ein Drucksensor (15) und über ein Ventil (16) eine hydraulische Radbremse (3) angeschlossen sind, **dadurch gekennzeichnet, dass** aus einem mit dem Drucksensor (15) gemessenen Druckerzeugerdruck (p_{Vor}) der zukünftige Radbremsdruck (p_{Rad}) ermittelt wird, der nach einer Zeitspanne (t_{Tot}) nach der Messung des Druckerzeugerdrucks (p_{Vor}) in der Radbremse (3) herrschen wird, indem für jede Messung des Druckerzeugerdrucks (p_{Vor}) eine Radbremsdruckänderung (p_{Inc i}) in der Radbremse (3) während eines Messzeitabstands (t_{Takt}) nach der jeweiligen Messung des Druckerzeugerdrucks (p_{Vor}) ermittelt wird und die Summe der Radbremsdruckänderungen (Σp_{Inc i}), die innerhalb einer Zeitspanne, die so lange wie die Zeitspanne (t_{Tot}) ist und die mit der Messung des Druckerzeugerdrucks (p_{Vor}) endet, vor der Messung des Druckerzeugerdrucks (p_{Vor}) ermittelt worden sind, zum gemessenen Druckerzeugerdruck (p_{Vor}) addiert werden, wobei die Zeitspanne (t_{Tot}) eine Totzeit des Drucksensors (15) und eine Schließzeit des Ventils (16) umfasst und die Zeitspanne (t_{Tot}) länger als der Messzeitabstand (t_{Takt}) ist.

2. Verfahren nach Anspruch 1, **dadurch gekennzeichnet, dass** die während der die Totzeit des Drucksensors (15) und die Schließzeit (t_{Tot}) des Ventils (16) umfassenden Zeitspanne (t_{Tot}) ermittelten Radbremsdruckänderung (p_{Inc i}) in einen Ringspeicher geschrieben werden, wobei die älteste Radbremsdruckänderung (p_{Inc n}) mit der jüngsten Radbremsdruckänderung (p_{Inc 0}) überschrieben wird und die Summe der in dem Ringspeicher gespeicherten Radbremsdruckänderungen (Σp_{Inc i}) zum gemessenen Druckerzeugerdruck (p_{Vor}) addiert werden.

3. Verfahren nach Anspruch 1 oder 2, **dadurch gekennzeichnet, dass** die Radbremsdruckänderung (p_{Inc i}) mit einer Strömungsgleichung berechnet oder experimentell ermittelt wird.

4. Verfahren nach einem oder mehreren der Ansprüche 1 bis 3, **dadurch gekennzeichnet, dass** das Ventil (16) geschlossen wird, wenn der ermittelte zukünftige Radbremsdruck (p_{Rad}) einen Solldruck (p_{Soll}) erreicht oder übersteigt.

5. Verfahren nach einem oder mehreren der vorhergehenden Ansprüche, **dadurch gekennzeichnet, dass** der zukünftige Radbremsdruck (p_{Rad}) nur berechnet wird, wenn das Ventil (16) offen ist.

6. Verfahren nach einem oder mehreren der vorhergehenden Ansprüche, **dadurch gekennzeichnet, dass** der zukünftige Radbremsdruck (p_{Rad}) nur berechnet wird, wenn der Druckerzeugerdruck (p_{Vor}) steigt und/oder die Möglichkeit besteht, dass das Ventil (16) geschlossen werden soll.

7. Verfahren nach einem oder mehreren der vorhergehenden Ansprüche, **dadurch gekennzeichnet, dass** das Ventil (16) ein der Radbremse (3) zugeordnetes Einlassventil einer Schlupfregelung der Fahrzeugbremsanlage ist.

8. Verfahren nach einem oder mehreren der vorhergehenden Ansprüche, **dadurch gekennzeichnet, dass** die Fahrzeugbremsanlage einen Fremdkraft-Bremsdruckerzeuger (5) aufweist.

## Claims

1. Method for ascertaining a future wheel-brake pressure (p_{Rad}) of a hydraulic vehicle brake system which has a brake-pressure generator (5) to which a pressure sensor (15) and, via a valve (16), a hydraulic wheel brake (3) are connected, **characterized in that** a pressure-generator pressure (p_{Vor}) measured by the pressure sensor (15) is used to ascertain the future wheel-brake pressure (p_{Rad}) which will prevail in the wheel brake (3) after a period of time (t_{Tot}) after the measurement of the pressure-generator pressure (p_{Vor}) **in that**, for each measurement of the pressure-generator pressure (p_{Vor}), a change in wheel-brake pressure (p_{Inc i}) in the wheel brake (3) during a measurement time interval (t_{Takt}) after the respective measurement of the pressure-generator pressure (p_{Vor}) is ascertained, and the sum of the changes in wheel-brake pressure (Σp_{Inc i}) which have been ascertained within a period of time, as long as the period of time (t_{Tot}) and ending with the measurement of the pressure-generator pressure (p_{Vor}), before the measurement of the pressure-generator pressure (p_{Vor}) are added to the measured pressure-generator pressure (p_{Vor}), wherein the period of time (t_{Tot}) comprises a dead time of the pressure sensor (15) and a closing time of the valve (16) and the period of time (t_{Tot}) is longer than the measurement time interval (t_{Takt}).

2. Method according to Claim 1, **characterized in that** the changes in wheel-brake pressure (pine i) ascertained during the period of time (trot) comprising the dead time of the pressure sensor (15) and the closing time (t_{Tot}) of the valve (16) are written to a ring memory, wherein the oldest change in wheel-brake pressure (p_{Inc n}) is overwritten by the newest change in wheel-brake pressure (p_{Inc 0}), and the sum of the changes in wheel-brake pressure (Σp_{Inc i}) stored in the ring memory are added to the measured pressure-generator pressure (p_{Vor}).

3. Method according to Claim 1 or 2, **characterized in that** the change in wheel-brake pressure (p_{Inc i}) is calculated using a flow equation or is determined experimentally.

4. Method according to one or more of Claims 1 to 3, **characterized in that** the valve (16) is closed if the ascertained future wheel-brake pressure (p_{Rad}) reaches or exceeds a target pressure (p_{Soll}).

5. Method according to one or more of the preceding claims, **characterized in that** the future wheel-brake pressure (p_{Rad}) is calculated only if the valve (16) is open.

6. Method according to one or more of the preceding claims, **characterized in that** the future wheel-brake pressure (p_{Rad}) is calculated only if the pressure-generator pressure (pᵥₒᵣ) increases and/or it is possible that the valve (16) is to be closed.

7. Method according to one or more of the preceding claims, **characterized in that** the valve (16) is an inlet valve, assigned to the wheel brake (3), of a slip-control system of the vehicle brake system.

8. Method according to one or more of the preceding claims, **characterized in that** the vehicle brake system has a power-assisted brake-pressure generator (5).

## Revendications

1. Procédé permettant de déterminer une pression de frein de roue future (p_{Rad}) d'un système hydraulique de freinage de véhicule qui présente un générateur de pression de frein (5) auquel un capteur de pression (15) est raccordé et auquel un frein de roue hydraulique (3) est raccordé par l'intermédiaire d'une soupape (16),
**caractérisé en ce qu'**à partir d'une pression de générateur de pression (p_{Vor}), mesurée à l'aide du capteur de pression (15), la pression de frein de roue future (p_{Rad}) qui régnera après une période de temps (t_{Tot}) après la mesure de la pression de générateur de pression (p_{Vor}) dans le frein de roue (3) est déterminée **en ce que** pour chaque mesure de la pression de générateur de pression (pvor), une variation de pression de frein de roue (p_{Inc i}) dans le frein de roue (3) est déterminée pendant un intervalle de temps de mesure (t_{Takt}) après la mesure respective de la pression de générateur de pression (p_{Vor}), et la somme des variations de pression de frein de roue (Σp_{Inc i}) qui ont été déterminées à l'intérieur d'une période de temps qui dure aussi longtemps que la période de temps (t_{Tot}), et qui se termine par la mesure de la pression de générateur de pression (p_{Vor}), avant la mesure de la pression de générateur de pression (p_{Vor}), est additionnée à la pression de générateur de pression (p_{Vor}) mesurée, la période de temps (t_{Tot}) comprenant un temps mort du capteur de pression (15) et un temps de fermeture de la soupape (16), et la période de temps (t_{Tot}) dure plus longtemps que l'intervalle de mesure (t_{Takt}).

2. Procédé selon la revendication 1, **caractérisé en ce que** la variation de pression de frein de roue (p_{Inc i}) déterminée pendant la période de temps (t_{Tot}) comprenant le temps mort du capteur de pression (15) et le temps de fermeture (t_{Tot}) de la soupape (16) est inscrite dans une mémoire annulaire, dans lequel la variation de pression de frein de roue la plus ancienne (p_{Inc n}) est écrasée par la variation de pression de frein de roue la plus récente (p_{Inc 0}), et la somme des variations de pression de frein de roue (Σp_{Inc i}) mémorisée dans la mémoire annulaire est additionnée à la pression de générateur de pression (p_{Vor}) mesurée.

3. Procédé selon la revendication 1 ou 2, **caractérisé en ce que** la variation de pression de frein de roue (p_{Inc i}) est calculée à l'aide d'une formule d'écoulement ou est déterminée expérimentalement.

4. Procédé selon une ou plusieurs des revendications 1 à 3, **caractérisé en ce que** la soupape (16) est fermée lorsque la pression de frein de roue future (p_{Rad}) déterminée atteint ou dépasse une pression de consigne (p_{Soll}).

5. Procédé selon une ou plusieurs des revendications précédentes, **caractérisé en ce que** la pression de frein de roue future (p_{Rad}) n'est calculée que si la soupape (16) est ouverte.

6. Procédé selon une ou plusieurs des revendications précédentes, **caractérisé en ce que** la pression de frein de roue future (p_{Rad}) n'est calculée que si la pression de générateur de pression (p_{Vor}) monte et/ou que la soupape (16) est susceptible d'être fermée.

7. Procédé selon une ou plusieurs des revendications précédentes, **caractérisé en ce que** la soupape (16) est une soupape d'admission d'une régulation antipatinage du système de freinage de véhicule, associée au frein de roue (3).

8. Procédé selon une ou plusieurs des revendications précédentes, **caractérisé en ce que** le système de freinage de véhicule présente un générateur de pression de frein à force extérieure (5).
